Europäisches Patentamt

European Patent Office

Office européen des brevets

(11) Veröffentlichungsnummer: **0 287 760**
**A1**

(12) **EUROPÄISCHE PATENTANMELDUNG**

(21) Anmeldenummer: **88102044.0**

(22) Anmeldetag: **12.02.88**

(51) Int. Cl.⁴: **H05B 6/78 , H05B 6/68 , A23L 3/00**

(30) Priorität: **15.04.87 DE 3712753**

(43) Veröffentlichungstag der Anmeldung:
**26.10.88 Patentblatt 88/43**

(84) Benannte Vertragsstaaten:
**CH DE FR GB IT LI SE**

(71) Anmelder: **HERMANN BERSTORFF**
**Maschinenbau GmbH**
**An der Breiten Wiese 3/5**
**D-3000 Hannover 61(DE)**

(72) Erfinder: **Koch, Klaus, Dipl.-Phys.**
**Feldstrasse 2**
**D-3014 Laatzen 4(DE)**
Erfinder: **Klemm, Manfred**
**Hildesheimer Strasse 122**
**D-3014 Laatzen 1(DE)**

(54) **Vorrichtung zum gleichmässigen und schnellen Erwärmen, Pasteurisieren oder Sterilisieren von Lebensmitteln oder dergleichen.**

(57) Es wird eine Vorrichtung zum gleichmäßigen und schnellen Erwärmen, Pasteurisieren und Sterilisieren mittels Mikrowellenenergie aufgezeigt. Durch Markierungen (14) auf einem endlosen, durch eine längliche Mikrowellenbehandlungskammer laufenden Transportband (2), die von einer an ein Regelgerät angeschlossenen Abtasteinrichtung erfaßt werden, wird das Transportband mit dem zu beaufschlagenden Gut exakt unterhalb der Einspeiseöffnungen (6, 7) für die Mikrowellenleistung taktweise gestoppt. Dann wird in das Gut absatzweise die erforderliche Energie eingespeist, wobei bestimmte Verhältnisse hinsichtlich des Austrittsquerschnittes der Mikrowelleneinspeiseöffnung und der Produktoberfläche, hinsichtlich geometisch ähnlicher Formen beider Flächen und der Abstände von der Austrittsöffnung der Mikrowelleneinspeisung zur Produktoberfläche eingehalten werden.

Fig. 1

## Vorrichtung zum gleichmäßigen und schnellen Erwärmen, Pasteurisieren oder Sterilisieren von Lebensmitteln oder dergleichen

Die Erfindung betrifft eine Vorrichtung mit den Merkmalen gemäß dem Oberbegriff von Patentanspruch 1.

Aus der DE-OS 34 47 544 ist eine längliche Mikrowellenbehandlungskammer mit einem durch die Kammer geführten, endlosen Transportband bekannt. In die Behandlungskammer werden von oben Mikrowelleneinspeisekanäle geführt, an die jeweils ein Mikrowellengenerator angeschlossen ist. Ein mit dem Mikrowellengenerator verbundenes Regelgerät schaltet die Generatoren immer dann ab, wenn die Ränder einer zu beaufschlagenden Packung unter die Einspeiseöffnung hindurchlaufen, um ein Überhitzen der Packungsränder zu vermeiden.

Eine gleichmäßige und schnelle Aufheizung läßt sich mit dieser Einrichtung nicht verwirklichen.

Es ist die Aufgabe der Erfindung, eine Vorrichtung zu schaffen, mit der eine sehr gleichmäßige und schnelle, eine Überhitzung der Ränder verhindernde sowie energiesparende Temperierung von Lebensmitteln mittels Mikrowellenenergie in einer länglichen Behandlungskammer durchführbar ist.

Die Aufgabe wird durch die in Anspruch 1 beschriebenen Merkmale gelöst. Vorteilhafte Weiterbildungen des Erfindungsgedankens werden in den Ansprüchen 2 - 10 niedergelegt.

Durch die Anordnung einer Abtasteinrichtung, die Markierungen an oder auf dem endlosen Transportband abtastet, wird mittels eines damit verbundenen Regelgerätes das Transportband an vorher festgelegten Stellen abgestoppt.

Der Stoppvorgang erfolgt derart, daß ein zu behandelndes, auf dem Transportband positioniertes Produkt genau unterhalb der einzelnen Einspeiseöffnung abgestoppt und dort für eine bestimmte Zeit verweilt. In dieser Position wird vom Regelgerät die erforderliche Mikrowellenleistung in das Produkt eingeleitet.

Die Verweilzeit bzw. Stoppzeit des Transportbandes unterhalb der Einspeiseöffnung wird ermittelt durch eine Festlegung der Gesamtbeaufschlagungszeit auf das Produkt, geteilt durch die Anzahl der einzelnen Einspeiseöffnungen.

Wird beispielsweise eine Gesamtbeaufschlagungszeit von einer Minute ermittelt, verweilt die Packung auf dem Transportband bei sechs Einspeisestellen unter jeder Einspeiseöffnung jeweils 10 Sekunden, so daß sich eine Gesamtbeaufschlagungszeit von einer Minute ergibt, zuzüglich der Transportzeit des Produktes von Einspeiseöffnung zu Einspeiseöffnung von wenigen Sekunden.

Durch die Ausbildung des Querschnitts der einzelnen Mikrowelleneinspeisekanalöffnungen hinsichtlich ihrer Geometrie, angepaßt an die geometrische Form der Oberfläche der Packung bzw. des Behälters, z.B. bei einer runden Packung auch runde Austrittsquerschnitte der Einspeisekanäle, wird eine sehr effektive und wirtschaftliche Energieeinleitung mit sehr geringen Abstrahlungsverlusten erreicht. Außerdem wird eine gleichmäßige Erwärmung von den Rändern zur Produktmitte wesentlich begünstigt.

Eine weitere Verbesserung hinsichtlich einer gleichmäßigen und wirtschaftlichen Energieeinleitung in das Produkt, wird durch die Festlegung der jeweiligen Flächenverhältnisse, d.h. der Querschnittsfläche der Austrittsöffnung der Einspeisekanäle zur Produktoberfläche erreicht, wobei die besten Werte erreicht wurden, wenn das Verhältnis Querschnittsfläche Mikrowellenaustrittsöffnung zur Produktoberfläche von 1 : 4 eingehalten wurde.

Wird ein Abstand von der Austrittsöffnung zur Produktoberfläche von gleich oder kleiner einer Wellenlänge (z.B. weniger als 12 cm bei einer 12 cm Welle (2.450 GHz) eingehalten, erhöht sich die Energieeinleitung nochmals, wobei insbesondere eine sehr gleichmäßige Temperaturverteilung über die Produktfläche, d.h. von der Mitte zu den Rändern erreicht wird.

Um eine, auch optisch erkennbare Markierung für das Positionieren der Lebensmitteln auf dem Transportband zu erreichen, können auf dem Transportband farblich gekennzeichnete Leisten oder dgl. angebracht sein, wodurch mittels der Abtasteinrichtung und des Regelgerätes eine exakte Positionierung der Lebensmittel jeweils unter bzw. über die Einspeiseöffnungen sichergestellt wird.

Die Abtasteinrichtung selbst kann in vorteilhafter Weise als Fotozelle ausgebildet sein, die auf eine optische Markierung oder auf eine auf dem Band befestigte Leiste anspricht.

Eine Ultraschallabtastung ist dann besonders vorteilhaft, wenn die Gefahr der Verschmutzung groß ist, weil Ultraschall in dieser Hinsicht unempfindlicher ist.

Für einen vollautomatisierten Betrieb ist es besonders günstig, wenn in dem endlosen Transportband an festgelegten Stellen für Näherungschalter erkennbare Metallteile angeordnet sind, wodurch eine elektrische Abtastung des Transportbandes durchführbar ist.

Die geometrisch ähnlichen Austrittsquerschnittsformen:

a) des Querschnitts der Mikrowellenaustrittsöffnung,

b) der Produktoberfläche bzw. der Behälter- oder Verpackungsoberfläche sind besonders vorteilhaft, weil durch diese Maßnahme die Abstrahlung bzw. die über die Ränder des Produktes hinweggehende Strahlen der eingespeisten Mikrowellenenergie verringert wird, so daß die Randbezirke der Packung weniger energiebeaufschlagt werden, wodurch die schädliche Ränderüberhitzung vermieden wird. Die nicht direkt in das Produkt eingespeiste Energie verbleibt in der Behandlungskammer als diffus verteilte Energie geringer Dichte.

Wird beispielsweise mit einem runden Querschnitt der Mikrowellenaustrittsöffnung gearbeitet und es soll eine rechteckige Verpackung beaufschlagt werden, ist der Anteil der direkten kontrollierbaren Energieeinstrahlung geringer, so daß ein ungleichmäßiges Temperaturfeld im Produkt entsteht.

Durch die Anordnung von Verschiebehülsen auf die Enden der Einspeisekanäle wird in vorteilhafter Weise eine einfache Verstellmöglichkeit des Abstandes von der Austrittsöffnung zur Produktoberfläche erreicht.

Die Verschiebung der Hülse kann bei runden Einspeisekanälen durch das Anbringen eines Gewindes auf dem Einspeisekanal, welches mit einem Innengewinde der Hülse zusammenwirkt, verwirklicht werden.

Bei rechteckigen Einspeisekanälen kann die Verschiebehülse z.B. durch Zahnstangentriebe auf dem Einspeisekanal, die mit drehbaren Antriebsritzeln an der Hülse zusammenwirken, verschoben werden, um den Abstand von der Austrittsöffnung zur Produktoberfläche verstellen zu können, wodurch eine erheblich verbesserte, direkte und kontrollierbare Energieeinstrahlung in das Produkt begünstigt wird.

Nachfolgend wird ein bevorzugtes Ausführungsbeispiels der Erfindung anhand einer Zeichnung erläutert.

Es zeigt:

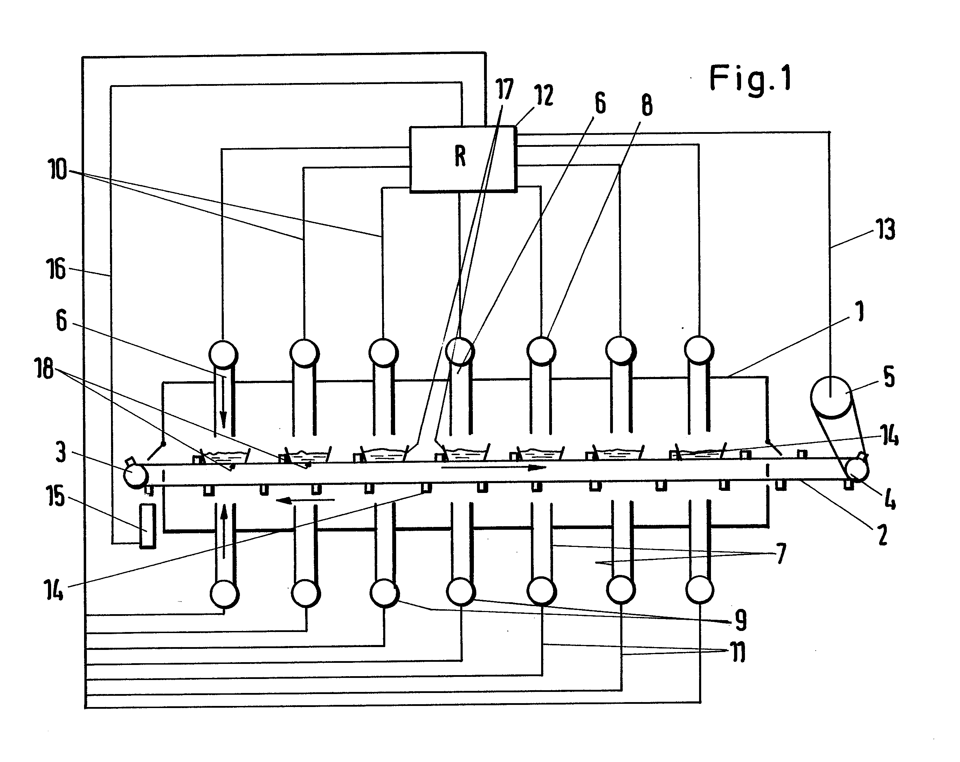

Fig. 1 einen schematisierten Längsschnitt durch eine Mikrowellenanlage.

Fig. 2 einen Querschnitt durch die Enden der Einspeisekanäle.

Fig. 3 bis 5 Temperaturverteilungsdarstellungen bei unterschiedlichen Abständen.

Durch die Behandlungskammer 1 wird ein endloses Transportband 2 geführt und um die Umlenkrollen 3 und 4 umgelenkt. An der Umlenkrolle 4 ist ein schematisiert dargestellter Antrieb 5 angeschlossen.

In die Behandlungskammer münden obere Mikrowelleneinspeisekanäle 6 und untere Mikrowelleneinspeisekanäle 7 ein, an die jeweils obere Generatoren bzw. Magnetrone 8 bzw. untere 9 für die Erzeugung der Mikrowellenenergie angeschlossen sind.

Die oberen Magnetrone 8 sind mittels der Leitungen 10 und die unteren Magnetrone 9 mittels der Leitungen 11 an ein computergesteuertes Regelgerät 12 angeschlossen.

Der Antrieb 5 ist durch eine Leitung 13 mit dem Regelgerät verbunden, um einen taktweisen Betrieb des Transportbandes 2 zu ermöglichen.

Auf dem Transportband 2 sind Markierungsleisten 14 in regelmäßigen Abständen angebracht. Anstelle der Markierungsleisten können auch farbliche, durch eine Fotozelle erkennbare Markierungen oder für Näherungsschalter erkennbare Metallteile vorhanden sein.

Zwecks Abtastung der Markierungen bzw. -leisten wird bei diesem Ausführungsbeispiel eine Fotozelle 15 vorgesehen, die mittels der Leitung 16 mit dem Regelgerät 12 verbunden ist.

Anhand eines praktischen Beispiels wird nachfolgend die Funktionsweise der Mikrowellenanlage erläutert.

In die Lebensmittelverpackung aus z.B. einer tiefgezogenen und versiegelten Kunststoffolie wurde ein vorgefertigtes Lasagne-Gericht eingegeben, das einem Pasteurisiervorgang unterworfen werden soll, um Keime abzutöten zwecks Verlängerung der Verbrauchszeit bzw. der Haltbarkeit.

Die Packungen hatten folgende Abmessungen:
Länge:     190 mm
Breite:    140 mm
Höhe:      28 mm
Gewicht:   400 g

Um die für einen Pasteurisiervorgang notwendige Produkttemperatur von 80° C eine Minute lang aufrecht zu erhalten, wurde ein Leistungsbedarf von 2,4 kW pro Packung für die Durchlaufzeit errechnet, wobei von einer Produkteingangstemperatur von 20° C ausgegangen wurde.

Das Regelgerät wurde folgendermaßen eingestellt:

a) Alle oberen Magnetrons 8 und unteren Magnetrons 9 wurden auf eine Leistungsabgabe von je 1,2 Wh programmiert, so daß von unten und von oben jeweils durch die Einspeisekanäle 6 und 7 zusammen eine Mikrowellenleistung von 2,4 KW auf jede Lasagne-Packung 1 Minute lang einwirkte.

b) Es sind sieben obere und sieben untere Einspeisekanäle 6 und 7 vorhanden. Die Gesamtbeaufschlagungszeit von einer Minute wurde aufgeteilt auf 8,5 Sekunden pro oberer und unterer Einspeiseöffnung, d.h. die Verweilzeit des Transportbandes mit der Lasagne-Packung im Mittelpunkt 18 der Energieeinspeiseöffnung 6 und 7, betrug jeweils 8,5 Sekungen.

Es wird somit eine Gesamtenergiebeaufschlagungszeit von 7 mal 8,5 Sekunden = 1 Minute bei konstanter Mikrowellenleistungsabgabe von 2,4 kW verwirklicht, und zwar jeweils mit der vollen erforderlichen Leistung von 2,4 kW pro Packung.

Entsprechend der rechteckigen Packungsoberfläche von 190 × 140 mm wurde ein rechteckiger Mikrowelleneinspeisekanalquerschnitt von 43 × 86 eingesetzt. Beide Austrittsquerschnittsformen beziehen sich somit auf geometrisch ähnliche Rechtecke.

Die Querschnittsfläche der Austrittsöffnung des Mikrowelleneinspeisekanals bei Abmessungen von 43 mm × 86 mm betrug

3.700 mm²

die Packungsoberfläche von 190 × 140 mm betrug 26.600 mm²

Es ergibt sich somit ein Verhältnis der beiden Flächen von rund 1 : 7.

Der Abstand von der Austrittsöffnung zur Produktoberfläche betrug 50 mm.

Zur Anwendung gelangte eine Mikrowellenanlage, die mit einer Wellenlänge von 12 cm arbeitete (Frequenz von 2.450 GHz).

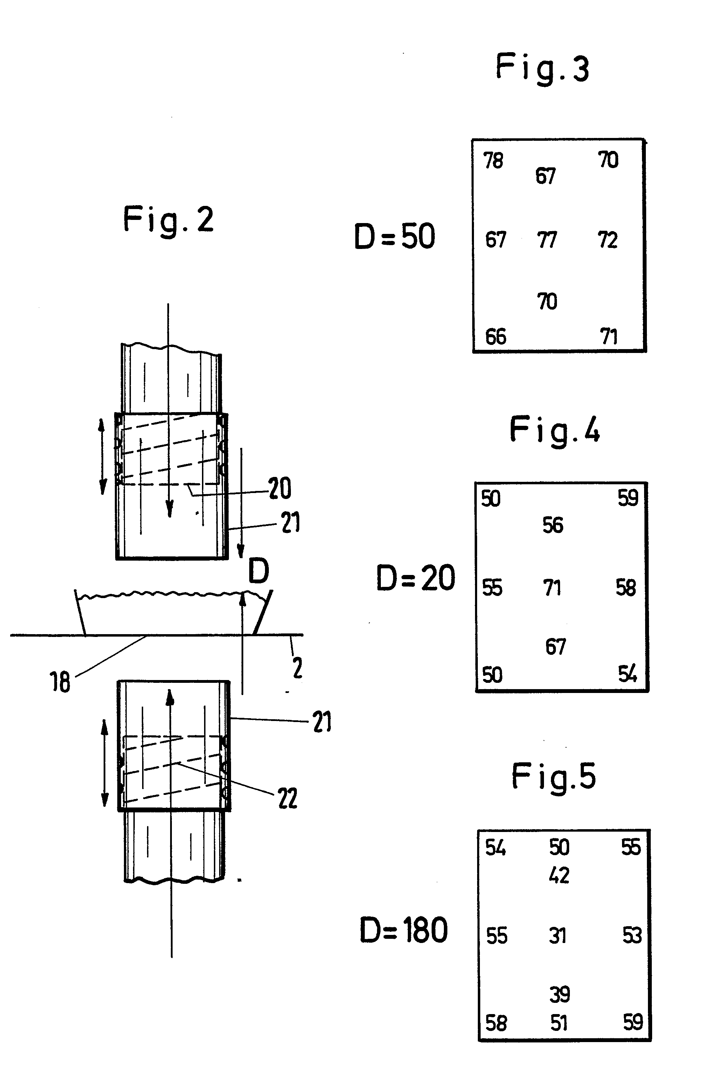

Die Temperaturverteilung in der Verpackung wird in Fig. 3 wiedergegeben.

Aus Fig. 3 wird ersichtlich, daß die Temperaturdifferenz in der Packung, insbesondere hinsichtlich der Randbereiche nur gering ist, so daß ein Verbrennen der Randbereiche vermieden wurde. Es wurde eine sehr gleichmäßige Keimabtötigung über die gesamte Fläche festgestellt.

Bei einem in Fig. 4 dargestellten Vergleichsversuch mit 20 mm Abstand zwischen der Mikrowellenkanalaustrittsöffnung von 43 × 86 mm und der Produktoberfläche von 190 × 140 mm wurden Werte ermittelt mit einer Verteilung über die Produktfläche, wie angegeben.

Die Temperatur im Produktmittelpunkt ist mehr als 25 % höher als an den Rändern.

Ein derartiges Temperaturprofil ist hinnehmbar, weil sich eine Temperaturvergleichmäßigung einstellt durch ein Wandern der Innentemperatur nach außen.

Bei dem in Fig. 5 gezeigten Beispiels mit gleichem Austrittsquerschnitt und Packungsgröße, wie in Fig. 3 und 4, betrug der Abstand Einspeiseöffnung - Produktoberfläche 180 mm, also mehr als die Wellenlänge von 120 mm.

Das Temperaturprofil zeigt deutlich, daß die Ränder fast doppelt so hoch erhitzt wurden als der Mittelpunkt.

Da bei dem Versuch jeweils nur eine Mikrowellenbeaufschlagungszeit von 1 Minute geteilt durch die Anzahl der Einspeiseöffnunge, d.h. jeweils 8,5 Sekunden pro oberer Einspeiseöffnung vorgenommen wurde, kam es nicht zu Verbrennungserscheinungen. Wird jedoch ein Pasteurisiervorgang unter Beibehaltung eines Abstandes von 180 mm durchgeführt, mit dem Zweck im Produktmittelpunkt die Pasteurisiertemperatur von 80° C zu erreichen, ergeben sich Randtemperaturen von etwa 120° C und höher, die ein Entflammen des Produktes nach sich ziehen bzw. ein Aufplatzen der Packungen durch den Dampfdruck verursachen.

**Bezugszeichenliste**

1 = Behandlungskammer
2 = Transportband
3 = Umlenkrollen
4 = Umlenkrollen
5 = Antrieb
6 = obere Einspeisekanäle
7 = untere Einspeisekanäle
8 = Magnetron, obere
9 = Magnetron, untere
10 = Leitung, oben
11 = Leitung, unten
12 = Regelgerät
13 = Leitung, Antrieb
14 = Markierungsleisten auf Transportband
15 = Fotozelle
16 = Leitung
17 = Lebensmittelbehälter
18 = Fokussierungspunkt (Mittelpunkt)
20 = Kanalende
21 = Hülsen
22 = Gewinde

**Ansprüche**

1. Vorrichtung zum gleichmäßigen und - schnellen Erwärmen, Pasteurisieren oder Sterilisieren von durch eine längliche Mikrowellenbehandlungskammer auf einem endlosen Transportband geführten, in Behältern oder in abgeschlossenen, Mikrowellen durchlässigen Verpackungen sich befindenden Lebensmitteln, mit von oben in den Behandlungsraum geführten Mikrowelleneinspeisekanälen, an die ein oder mehrere Mikrowellengeneratoren angeschlossen sind und mit einem Mikroprozessor gesteuerten Regelgerät für die Generatoren, **dadurch gekennzeichnet,** daß eine auf mechanische, optische oder elektrische Markierungen (14) des Transportbandes (2) ansprechende mit dem Regelgerät (12) verbundene Abtasteinrichtung (15) vorgesehen wird, daß das Transportband (2) durch das Regelgerät (12) taktweise an vorher festgelegten Stellen seines Umlaufs abstoppbar ausgebildet ist, daß die Austrittsquerschnittsform bzw. die Austrittsquerschnittsfläche der von oben und/oder unten in die Behandungskammer ragenden Mikrowelleneinspeisekanäle (6, 7) geometrisch etwa entsprechend der zu behandelnden Lebensmitteloberflächenform ausgebildet ist,

daß der Abstand (D) von der Austrittsöffnung zur Oberfläche des zu behandelnden Lebensmittels gleich oder kleiner einer Wellenlänge der eingesetzten Mikrowellenenergie ist.

2. Vorrichtung nach Anspruch 1,
**dadurch gekennzeichnet,**
daß die Austrittsquerschnittsfläche der Mikrowelleneinspeisekanäle (6, 7) zur Oberfläche des zu behandelnden Lebensmittels in einem Verhältnis von 1 : 2 bis 1 : 8, vorzugsweise 1 : 4 bis 1 : 6, insbesondere 1 : 4 gewählt wird.

3. Vorrichtung nach Anspruch 1,
**dadurch gekennzeichnet,**
daß auf dem Transportband (2) eine farblich gekennzeichnete Erhebung ausgebildet ist.

4. Vorrichtung nach Anspruch 1,
**dadurch gekennzeichnet,**
daß in dem Transportband (2) an bestimmten Stellen eine für Näherungsschalter (15) erkennbare metallische Markierung angebracht ist.

5. Vorrichtung nach Anspruch 1,
**dadurch gekennzeichnet,**
daß die Abtasteinrichtung (15) als Fotozelle ausgebildet ist.

6. Vorrichtung nach Anspruch 1,
**dadurch gekennzeichnet,**
daß die Abtasteinrichtung (15) als Ultraschallabtasteinrichtung ausgebildet ist.

7. Vorrichtung nach Anspruch 1,
**dadurch gekennzeichnet,**
daß die Abtasteinrichtung (15) als Näherungsschalter ausgebildet ist.

8. Vorrichtung nach Anspruch 1,
**dadurch gekennzeichnet,**
daß die geometrisch ähnlichen austrittsquerschnittsformen bzw. -flächen der Mikrowellen einspeisekanäle und der Behälter oder Verpakkungsoberfläche quadratisch, rechteckig oder rung ausgebildet sind

9. Vorrichtung nach Anspruch 1,
**dadurch gekennzeichnet,**
daß die Wellenlänge 12 cm (F = 2.450 GHz) beträgt

10. Vorrichtung nach Anspruch 1,
**dadurch gekennzeichnet,**
daß auf den, in die Behandlungskammer (1) ragenden Einspeisekanalenden (20) vertikal verschiebbare und arretierbare, den Abstand von der Austrittsöffnung bis zur Produktoberfläche verändernde runde oder rechteckige Hülsen (21) angeordnet sind.

Fig.1

# Fig. 2

# Fig. 3

D = 50

| 78 | | 70 |
|---|---|---|
| | 67 | |
| 67 | 77 | 72 |
| | 70 | |
| 66 | | 71 |

# Fig. 4

D = 20

| 50 | | 59 |
|---|---|---|
| | 56 | |
| 55 | 71 | 58 |
| | 67 | |
| 50 | | 54 |

# Fig. 5

D = 180

| 54 | 50 | 55 |
|---|---|---|
| | 42 | |
| 55 | 31 | 53 |
| | 39 | |
| 58 | 51 | 59 |

20
21
D
18
2
21
22

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 547 732 (LEQUEUX)<br>* Seite 6, Zeile 29 - Seite 8, Zeile 21; Figur 1 *<br>--- | 1,8,9 | H 05 B 6/78<br>H 05 B 6/68<br>A 23 L 3/00 |
| A | GB-A- 597 832 (JAMES HENRI COTTON)<br>* Seite 2, Zeilen 32-39; Figuren 1-3 *<br>--- | 1,2,8,10 | |
| A | DE-A-1 440 532 (NEFF)<br>* Seite 5, Abschnitt 2; Figur 2 *<br>--- | 1,2,5,8,9 | |
| A | DE-A-1 565 259 (FRIED. KRUPP)<br>* Seite 5, letzter Abschnitt; Seite 6, Zeilen 1-4; Seite 7, letzter Abschnitt *<br>--- | 1,8,10 | |
| A | DE-A-2 429 128 (JURY WENIAMINOWITSCH et al.)<br>* Seite 7, Abschnitt 1 *<br>--- | 1,3,9 | |
| A | FR-A-2 559 884 (H. BERSTORFF MASCHINENBAU)<br>--- | | RECHERCHIERTE SACHGEBIETE (Int. Cl.4) |
| A | US-A-4 615 014 (GIGANDET et al.)<br>--- | | H 05 B 6/00<br>A 61 L 2/00<br>A 23 L 3/00 |
| A | FR-A-1 340 108 (PATELHOLD et al.)<br>--- | | |
| A | GB-A-1 215 369 (REJLERS INGENJORSBYRA)<br>----- | | |

Der vorliegende Recherchenbericht wurde für alle Patentansprüche erstellt

| Recherchenort | Abschlußdatum der Recherche | Prüfer |
|---|---|---|
| DEN HAAG | 27-07-1988 | RAUSCH R.G. |